Europäisches Patentamt

European Patent Office

Office européen des brevets

(19)

(11) Publication number: **0 492 675 A1**

## EUROPEAN PATENT APPLICATION

(12)

(21) Application number: **91200217.7**

(22) Date of filing: **05.02.91**

(51) Int. Cl.5: **C02F 11/00**

(30) Priority: **20.12.90 BE 9001231**

(43) Date of publication of application:
**01.07.92 Bulletin 92/27**

(84) Designated Contracting States:
**AT BE CH DE DK ES FR GB GR IT LI LU NL SE**

(71) Applicant: **De Neef, Dirk**
**Ferdinand Verbiestlaan 34**
**B-2650 Edegem(BE)**

(72) Inventor: **De Neef, Dirk**
**Ferdinand Verbiestlaan 34**
**B-2650 Edegem(BE)**

(74) Representative: **Donné, Eddy**
**M.F.J.Bockstael Arenbergstraat 13**
**B-2000 Anvers(BE)**

(54) **Process for the consolidation of waste sludge or similar.**

(57) Procedure for the consolidation of waste sludge or similar, according to which procedure this waste sludge is mixed with a small amount of at least one calcium compound on the basis of calcium oxide and/or calcium sulphate - insofar this calcium compound is not already inherently present in this waste sludge - as well as with at least one alkali metal silicate and with at least one non-phytotoxic netting hardening agent consisting of organic components which contain more than twelve carbon atoms, characterised in that the waste sludge, the hardening agent and in case of need the added calcium compound are ground prior to the complete reaction of the silicate.

EP 0 492 675 A1

The invention relates to a procedure for the consolidation of waste sludge or similar, according to which procedure this waste sludge is mixed with a small amount of at least one calcium compound on the basis of calcium oxide and/or calcium sulphate - insofar this calcium compound is not already inherently present in this waste sludge - as well as with at least one alkali metal silicate and with at least one non-phytotoxic netting hardening agent consisting of organic components which contain more than twelve carbon atoms.

Waste sludge is here intended in a very broad sense so that hereunder both already existing waste sludge, slurry, watery residual products of industrial water purification installations and similar must be understood as waste sludge still to be produced, for example during the application of the procedure, such as waste sludge produced from household refuse or another solid substance which must first be crushed or moistened and/or with the application of the procedure be mixed with water, in which possibly the reagents are dissolved.

A procedure of the aforementioned type is described in the Belgian patent no. 900896.

The alkali metal silicate forms a calcium silicate insoluble in water that precipitates and therefore binds the solid constituents of the waste sludge. The hardening agent principally ensures the prevention of the leaching out of the remaining waste product.

The resulting waste product cannot dehydrate and with dumping in the bottom no danger of poisoning can occur. Because of the fact that the water soluble components, such as for example the heavy metals, but also other toxic elements, which are contained in the waste sludge, are chemically and/or physically bound and encapsulated, the resulting waste product can be dumped without harmful consequences, even in the sea. Through harrowing the waste product can be brought into a porous aggregated condition, after which, since all potential phytotoxic elements in the structure of the material are captured, direct sowing of for example grass types or planting of all sorts of crops becomes possible.

The purpose of the present invention is still to improve the quality of the resulting waste product.

For this purpose the waste sludge, the hardening agent and in case of need the added calcium compound are ground prior to the complete reaction of the silicate.

Through the grinding a better distribution of the reagents in the waste sludge and a better contact of the sludge with this reagents are obtained. Through the nature of the sludge sieves can hardly be utilised in order to retain the too large solid constituents since these sieves become blocked very quickly.

The waste sludge is preferably ground before the reagents are added.

In a suitable embodiment of the invention the waste sludge is ground until the granular division of the solid constituents lies between 2 and 18 mm.

With the same purpose of improving the quality of the resulting waste product, the waste sludge, the hardening agent and in case of need the calcium compound are compressed after mixing with the silicate, but prior to the complete reaction of these reagents.

Also through the compression a better contact between the reagents and the sludge is obtained. Furthermore through the compression a temperature increase develops which, together with the better contact, accelerates the reaction of the reagents. A much harder end product can be obtained.

In a particular embodiment of the invention the compression is effected with an absolute pressure of between 1 and 40 bars.

Although this is not strictly necessary it is obviously preferable to apply both aforementioned measures together this means to grind the sludge prior to the reaction of the reagents and, after this grinding and after the addition of the reagents if the grinding is effected previously to compress the waste sludge.

In order to show better the characteristics according to the present invention, some preferred embodiments of the procedure for the consolidation of waste sludge or similar according to the invention are described hereafter, as examples and without any restrictive character.

In order to consolidate waste sludge in the first place this waste sludge is ground. This can be effected in a known manner with the apparatus available on the market.

Grinding is preferably effected until the size of the solid constituents of the waste sludge is situated between 2 and 18 mm for example between 2 and 7 mm, between 4 and 14 mm or between 4 and 18 mm.

Insofar no calcium compound on the basis of calcium oxide and/or calcium phosphate is yet present in the waste sludge such a calcium compound is added. This calcium compound can consist of cement, plaster or any other calcium salt.

The amount of calcium salt to be added generally varies between 0 and 100 weight % of the mass of the waste sludge to be treated and is dependent upon the nature of the material to be treated and in particular upon the amount of calcium salt that is already contained therein, and upon the form under which the calcium is added. The exact amount is determined experimentally.

In any case an amount of alkali metal silicate and an amount of a non-phytotoxic netting organic hardening agent are added to the waste sludge.

These reagents can be added simultaneously and possibly together with the calcium compound but can also be added separately. During or after the addition the reagents are mixed with the sludge whereby, also through the fact that the waste sludge was ground, a rather homogeneous distribution of the reagents in the sludge and a good contact of the reagents with the solid constituents of the sludge is obtained.

The alkali metal silicate and the hardening agent are usually mixed in a mutual proportion of 10 to 1 but other proportions are also possible depending upon the application. Depending upon the nature and the quality of the waste sludge or similar the amount of alkali metal silicate to be added generally amounts to 2 to 30% of the mass of the waste sludge to be treated.

A suitable alkali metal silicate is sodium silicate. Use can also be made of a mixture of sodium silicate and potassium silicate which has the advantage of being less phytotoxic. Strong sodium concentrations are phytotoxic on the other hand.

The hardening agent must consist of organic components which contain more than twelve carbon atoms and which are consequently not phytotoxic. The hardening agent can be compound or singular netting.

Suitable hardening agents which can be utilised separately or mixed together with other hardening agents of the following group are: polyvinyl alcohol, urea formaldehyde mixed with proteins, polyacrylamide mixed with glyoxal etc.

Through the addition of the alkali metal silicate to the calcium salt containing waste sludge it forms into a non water soluble calcium silicate that precipitates and hereby binds the solid constituents of the waste sludge, while the water is also chemically bound in the structure by means of an exothermic reaction.

Through the addition of the alkali metal silicate the leaching out of the resulting product is counteracted or avoided.

After the mixing with the aforementioned reagents but before the reaction thereof has taken place, this is therefore immediately after the mixing, the mixture is compressed with an absolute pressure of between 1 and 40 bars.

Through this compression the contact between the reagents and the sludge is still improved. Furthermore a temperature increase occurs through which the reaction speed increases.

Particularly through the preparatory grinding of the waste sludge and the compression of the waste sludge mixed with reagents an end product of an excellent quality is obtained from which no poisonous constituents can still be liberated. The reaction speed also increases which rather more than compensates the additional time for the grinding and compressing.

The present invention is in no way restricted to the embodiments described as examples, but such procedure for the consolidation of waste sludge can be applied in all kinds of modified forms without departing from the scope of the present invention.

As already mentioned the waste product can also be household refuse or a solid substance which must first be crushed and possibly moistened, after which it can be mixed for example with an watery solution of an alkali metal silicate. The original waste product that was for example poisonous, can then be further encapsulated according to the procedure corresponding to the procedure. The crushing of the solid waste product can possibly be effected in one operation with the grinding of the sludge.

The grinding need not necessarily be effected prior to the addition of the reagents. It can also take place immediately after the addition whereby grinding and mixing can be combined in one operation. The compression must in any case take place after the addition of the reagents and the grinding.

## Claims

1. Procedure for the consolidation of waste sludge or similar, according to which procedure this waste sludge is mixed with a small amount of at least one calcium compound on the basis of calcium oxide and/or calcium sulphate - insofar this calcium compound is not already inherently present in this waste sludge - as well as with at least one alkali metal silicate and with at least one non-phytotoxic netting hardening agent consisting of organic components which contain more than twelve carbon atoms, characterised in that the waste sludge, the hardening agent and in case of need the added calcium compound are ground prior to the complete reaction of the silicate.

2. Procedure according to the preceding claim, characterised in that the waste sludge is ground before the silicate, the hardening agent and in case of need the calcium compound are added.

3. Procedure according to one of the preceding claims, characterised in that the waste sludge is ground until the size of the solid constituents is situated between 2 and 18 mm.

4. Procedure according to the preceding claim, characterised in that the waste sludge is ground until the solid constituents form a fraction between 4 and 14 mm.

5. Procedure according to the preceding claim, characterised in that the waste sludge is ground until the solid constituents form a fraction between 2 and 7 mm.

6. Procedure for the consolidation of waste sludge or similar, according to which procedure this waste sludge is mixed with a small amount of at least one calcium compound on the basis of calcium oxide and/or calcium sulphate - insofar this calcium compound is not already inherently present in this waste sludge - as well as with a non-phytotoxic netting hardening agent consisting of organic components which contain more than twelve carbon atoms, characterised in that the waste sludge, the hardening agent and in case of need the calcium compound are compressed after mixing with the silicate, but prior to the complete reaction of these reagents.

7. Procedure according to the preceding claim, characterized in that the compression is effected between 1 and 40 bars.

8. Procedure according to one of the claims 1 through 5 and one of the claims 6 and 7, characterised in that prior to the complete reaction of the reagents the waste sludge is ground and, after the addition of the reagents and after this grinding, but prior to the complete reaction of the reagents, is compressed.

9. Procedure according to one of the preceding claims, characterised in that the alkali metal silicate that is added is a sodium silicate.

10. Procedure according to one of the claims 1 through 8, characterised in that the alkali metal silicate that is added is a mixture of sodium silicate and potassium silicate.

11. Procedure according to one of the preceding claims, characterised in that the hardening agent contains one or more products from the group: polyvinyl alcohol, urea formaldehyde mixed with proteins, polyacrylamide mixed with glyoxal.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | EP-A-0 181 010 (DE NEEF DIRK)<br><br>* page 7; claims 1-5 *<br>* page 7, paragraph 4 *<br>--- | 1,2,6,8,<br>9-11 | C02F11/00 |
| Y | FR-A-2 462 396 (KANDELSKONTOR LUDBERT GRAF ZU MUNSTER)<br>* page 9; claim 1 *<br>* page 2, line 35 - page 5, line 16 *<br>* page 7, line 2 - line 16 *<br>--- | 1,2,6,8,<br>9-11 | |
| Y | EP-A-0 230 913 (WINTERSHALL)<br><br>* column 12; claims 1-11 *<br>* column 6; example 2 *<br>* column 7; example 4 *<br>--- | 1,2,6,8,<br>9-11 | |
| Y | EP-A-0 389 328 (PICHAT, PHILIPPE)<br><br>* page 4; claim 1 *<br>* page 1, line 35 - line 40 *<br>--- | 1,2,6,8,<br>9-11 | |
| P,A | EP-A-0 408 545 (TECHFORM ENGINEERING)<br>* page 7; claim 1 *<br>* page 6, line 2 - line 10 *<br>--- | 1,6,7 | TECHNICAL FIELDS SEARCHED (Int. Cl.5 )<br><br>C02F |
| A | PATENT ABSTRACTS OF JAPAN<br>vol. 14, no. 418 (M-1022)10 September 1990<br>& JP-A-2 162 003 ( NEOTETSUKU K.K. ) 21 June 1990<br>* abstract * | 1 | |

The present search report has been drawn up for all claims

| Place of search | Date of completion of the search | Examiner |
|---|---|---|
| THE HAGUE | 02 APRIL 1992 | TEPLY J. |